# FASCICULE DE BREVET EUROPEEN

(11) **EP 0 311 474 B1**
(45) Date de publication et mention de la délivrance du brevet: **04.08.1993**
(21) Numéro de dépôt: 88402363.1
(22) Date de dépôt: 20.09.1988
(51) Int. Cl.: C08G 18/40, C08G 18/66, C08G 18/00, B60R 13/08

(54) **Mousse de polyuréthanne souple, produits d'insonorisation comportant une telle mousse et leur procédé de fabrication**
Polyurethan-Weichschaumstoff, diesen Schaumstoff enthaltende schalldämpfende Produkte sowie deren Herstellungsverfahren
Flexible polyurethane foam, sound-proofing products comprising such a foam, and their preparation process

(30) Priorité: 01.10.1987 FR 8713572
(43) Date de publication de la demande: 12.04.1989
(73) Titulaire: HUTCHINSON, F-75008 Paris (FR)
(72) Inventeur: Nivert, Chantal, F-86140 Lencloître (FR)
(74) Mandataire: Orès, Bernard

(56) Documents cités:
- EP-A- 0 056 121
- DE-B- 1 923 161
- FR-A- 1 261 063
- FR-A- 2 059 062
- US-A- 2 965 584

## Description

L'invention a pour objet une mousse de polyuréthanne souple, des produits d'insonorisation comportant une telle mousse et leur procédé de fabrication.

Les propriétés d'isolation thermique des mousses de polyuréthanne sont connues de longue date et l'on connaît également l'emploi de ces mousses dans le domaine de l'insonorisation, notamment celle de l'habitacle de véhicules automobiles. Aussi bien pour améliorer le confort acoustique des passagers d'une automobile ou d'un véhicule utilitaire, que pour diminuer le niveau de bruit général résultant de la circulation de ces véhicules, on a déjà proposé d'associer à la source de bruit des matériaux d'absorption des ondes sonores placés en regard de ladite source, par exemple sur la face interne du capot du compartiment moteur. On a également proposé d'associer à la paroi séparant l'habitacle du compartiment moteur, c'est-à-dire au tablier de même qu'aux tôles de plancher ou autres, des produits agissant par un effet d'amortissement ou un effet d'isolation. Lorsqu'il agit par effet d'amortissement, le produit d'insonorisation est destiné à empêcher la vibration de la tôle et ce but est atteint dans de nombreuses réalisations connues à l'aide de matériaux à base de bitume qui, non seulement sont lourds ou très lourds, mais présentent en outre des caractéristiques qui décroissent lorsque la température augmente. Lorsqu'il agit par effet d'isolation, le produit d'insonorisation est destiné à arrêter, comme à l'aide d'une barrière, le bruit transmis par exemple par la tôle de tablier séparant l'habitacle du compartiment moteur du véhicule. Le produit isolant est alors disposé dans le volume à isoler, c'est à dire du côté de l'habitacle dans le cas d'un véhicule de tourisme, et ledit produit est fréquemment réalisé en tant que système masse-ressort, c'est-à-dire sous forme d'un septum réfléchissant les ondes sonores, par exemple en PVC ou en caoutchouc, sur lequel est fixé le matériau "ressort" comme du feutre ou une mousse de polyuréthanne, l'ensemble masse-ressort étant plaqué sur la paroi en tôle du véhicule par la face libre de la mousse ou du feutre, c'est-à-dire la face distante du septum.

De tels produits d'insonorisation à effet isolant sont décrits dans DE-A1-1 923 161 où ils sont définis en tant que mousse de polyuréthanne comportant au moins 60 % en poids de charge lourde ceci leur conférant une densité telle qu'ils sont mal adaptés à leur utilisation dans l'industrie automobile où la tendance est, d'une façon générale, à des économies de poids. En outre, et comme indiqué dans FR-A1-2 545 493 qui se réfère spécifiquement au document mentionné en premier lieu ci-dessus, le module d'élasticité relativement élevé ou le faible facteur de perte des produits connus selon DE-A1-1 923 161 ne permettent pas de les utiliser pour former des systèmes masse-ressort.

De tels systèmes sont par contre décrits dans le document mentionné en second lieu, à savoir FR-A1-2 545 493 (TEROSON GmbH) qui vise une mousse de polyuréthanne exempte de charge et qui, en faisant référence à une mousse d'une densité d'environ 45 kg/m³, est prévue soit pour entrer dans la constitution de systèmes masse-ressort, soit pour être utilisée comme matériau d'absorption des ondes sonores, comme explicité ci-dessus.

Le matériau mousse de TEROSON, d'application particulièrement intéressante pour la fabrication de tapis de sol de véhicules automobiles est obtenu par réaction d'un isocyanate ou d'un mélange d'isocyanates et de polyéther triols en tant que polyols, ces derniers ayant un nombre OH compris entre 180 et 400, de préférence compris entre 180 et 350.

Un tel matériau, qui n'est pas prévu et ne présente pas les caractéristiques requises pour être utilisé en tant que produit d'insonorisation à effet d'amortissement, ne permet pas de répondre complètement au problème posé par les fabricants de véhicules automobiles et qui est celui de fournir une bonne qualité d'insonorisation des véhicules par effet d'isolation, mais aussi d'amortissement, sans avoir à recourir, pour ce dernier effet, aux matériaux lourds ou très lourds des réalisations connues à base de bitume ou analogue.

Il en est de même des produits divulgués dans EP-0 056 121 et FR-2 059 062, -qui sont principalement destinés à la fabrication de sièges d'automobiles ou de parties de tels sièges-, et qui n'apportent pas, eux non plus, une solution au problème posé.

A la suite des travaux poursuivis par la Demanderesse pour tenter d'apporter une solution au problème posé, celle-ci a maintenant trouvé, de manière surprenante, qu'il était possible de fournir une mousse de polyuréthanne souple présentant les caractéristiques requises tant pour la fabrication de produits agissant par effet d'amortissement que par effet d'isolation et cela en préparant ladite mousse par réaction d'un diisocyanate ou de polyisocyanates purs ou modifiés avec un mélange de polyols, plus précisément un tel mélange contenant au moins un polyéther polyol et un polyesterpolyol de caractéristiques prédéterminées.

Conformément à l'invention, on propose une mousse de polyuréthanne souple ayant une densité comprise entre 0,08 et 1,3 utilisable notamment pour le fabrication de produits d'insonorisation, en particulier de produits d'insonorisation de véhicules automobiles obtenue par réaction d'une composition constituée par (A) un diisocyanate ou des polyisocyanate(s) purs ou modifiés et (B) un mélange contenant un polyétherpolyol (b1) (teneur en OH de 25 à 56 mg KOH/g) et un polyester polyol (b2) (teneur en OH de 22 à 40 mg KOH/g), caractérisée en ce que le mélange représente au moins 75 % en poids de la composition (A) + (B) et contient :
(b1) 30 à 90 % en poids de polyétherpolyol ; et
(b2) 10 à 50 % en poids de polyester polyol.

Une telle mousse de polyuréthanne, dont les caractéristiques peuvent, en outre, être choisies pour leur adaptation à la fabrication de produits insonorisants mettant en oeuvre un effet d'amortissement et/ou un effet d'isolation est ainsi d'utilisation particulièrement intéressante par les grandes possibilités d'emploi qu'elle offre.

Un produit d'insonorisation selon l'invention, notamment pour habitacle de véhicule automobile, est alors caractérisé en ce qu'il comprend une mousse de polyuréthanne souple obtenue comme indiqué ci-dessus, utilisée soit seule sous forme de pièce moulée pour son effet d'amortissement et/ou en tant que partie constitutive d'un système masse-ressort.

Dans un mode d'exécution du produit d'insonorisation selon l'invention, celui-ci est caractérisé en ce que ladite mousse de polyuréthanne est sous forme d'une pièce moulée de faible épaisseur (2 à 4 mm) dans le cas d'une mousse de densité voisine de l'unité ou de plus forte épaisseur (de l'ordre de 20 mm) dans le cas d'une mousse de faible densité, de l'ordre de 0,08 à 0,11.

Dans un autre mode d'exécution, le produit d'insonorisation selon l'invention est caractérisé en ce que la mousse de polyuréthanne souple d'une densité de 0,08 à 0,11 forme la partie "ressort" d'un système masseressort dont le septum est en caoutchouc thermoplastique, polyuréthanne chargé ou polymère thermoplastique.

A cet égard, l'invention envisage un produit d'insonorisation d'un intérêt particulier, caractérisé en ce qu'il comprend, sous forme d'un ensemble unitaire, un système masse-ressort et une couche à effet d'amortissement, l'ensemble étant propre à être rapporté sur le tablier du véhicule automobile qu'il est destiné à équiper.

Dans une telle réalisation, la mousse de polyuréthanne souple constitutive de la partie "ressort" est une mousse de faible densité et la couche à effet d'amortissement est une mousse de polyuréthanne souple selon l'invention.

Quel que soit le produit d'insonorisation à base de la mousse de polyuréthanne souple obtenue comme indiqué ci-dessus, l'invention prévoit de fabriquer ledit produit soit à l'aide de machines de mélange à basse pression soit, de préférence, généralement désignées par leur dénomination anglaise "RIM" (Reaction Injection Molding).

L'invention envisage également un mode de fabrication par projection, par exemple à l'aide d'un pistolet ou analogue dans un moule de forme appropriée.

Une mousse de polyuréthanne souple selon l'invention est avantageusement obtenue en faisant réagir les composants suivants, en parties en poids :

| | |
|---|---|
| (b1) Triol à base d'oxyde de propylène/oxyde d'éthylène | 22,60 |
| (b2) Polyester polyol (polybutylèneglycol adipate) | 25 |
| Diéthylène glycol | 4,90 |
| Catalyseurs | 0,08 |
| Colorant | 1,96 |
| Trichlorofluorométhane | 2,94 |
| Chlorure de méthylène | 0,98 |
| Sulfate de baryum | 25 |
| (A) Polyisocyanate (28 % NCO) | 16,54 |

Une autre réalisation préférée d'une mousse de polyuréthanne ayant une densité comprise entre 0,08 et 1,3 est celle obtenue en faisant réagir les composants suivants, en parties en poids :

| | |
|---|---|
| (b1) Triol à base d'oxyde de propylène/oxyde d'éthylène (teneur en OH de 25 à 56 mg KOH/g) | 32,07 |
| (b2) Polyester polyol (teneur en OH de 22 à 40 mg KOH/g) (polybutylèneglycol adipate) | 30 |
| Diéthylène glycol | 2,78 |
| Glycérine | 0,32 |
| Eau | 0,96 |
| Catalyseurs | 0,55 |
| Colorant | 0,38 |
| Trichlorofluorométhane | 4,18 |
| Stabilisant de cellules | 0,08 |
| Polyisocyanate (28 % NCO) | 28,68 |

On obtient ainsi, selon l'invention, une mousse de polyuréthanne souple dont la densité (d) peut être réglée à volonté entre une valeur d = 1,3 et une valeur d = 0,08 et cette mousse, mise en oeuvre dans des produits d'insonorisation à effet d'amortissement, ou du type masse-ressort, fournit d'excellents résultats sur lesquels, en outre, les variations de température n'ont que peu d'influence.

L'invention sera bien comprise par la description qui suit de formes de réalisations données à titre d'exemple uniquement.

### EXEMPLE 1

Pour la fabrication d'un dispositif d'insonorisation, notamment de l'habitacle d'un véhicule automobile et, en particulier, un tel dispositif destiné à équiper la tôle de tablier et/ou les tôles de plancher du véhicule pour limiter la vibration desdites tôles et du tablier par effet d'amortissement, l'invention envisage l'utilisation d'une mousse de polyuréthanne souple d'une densité voisine de 1,3 à partir des constituants suivants :

| | |
|---|---|
| Triol à base d'oxyde de propylène/oxyde d'éthylène | 22,60 |
| Polyester polyol (polybutylèneglycol adipate) | 25, |
| Diéthylène glycol | 4,90 |
| Catalyseurs | 0,08 |
| Colorant | 1,96 |
| Trichlorofluorométhane | 2,94 |
| Chlorure de méthylène | 0,98 |
| Sulfate de baryum | 25 |
| Polyisocyanate (28 % NCO) | 16,54 |

Les constituants ci-dessus, mis en oeuvre par les techniques de projection ou, de moulage par injection réaction (RIM) fournissent des feuilles ou plaques d'une épaisseur comprise entre 2 et 4 mm dont la forme correspond très exactement, par un choix approprié du moule, à celle du tablier ou aux tôles de plancher sur lesquelles le produit d'insonorisation doit être rapporté. Cette dernière opération est encore facilitée par le fait que la plaque ou feuille fabriquée selon l'invention présente, à sa sortie du moule, un "tack" naturel qui facilite l'adhérence et la fixation de la plaque ou feuille sur les tôles du véhicule automobile.

Des essais de l'effet d'amortissement obtenu, exécutés suivant la méthode SAE J671, conduisent à des gains de 12dB/s/kg/m² à 20°C, avec en outre une très faible variation des caractéristiques obtenues en fonction de la température.

Le poids de la plaque ou feuille amortissante est en outre notablement inférieur à celui de la couche amortissante usuelle connue à base de bitume, procurant ainsi un avantage supplémentaire au dispositif de l'invention.

### EXEMPLE 2

Fabrication d'une mousse de polyuréthanne de densité d = 0,08.

Les constituants de départ sont sensiblement les mêmes que ceux indiqués ci-dessus pour l'Exemple 1 sous réserve de l'omission de la charge de sulfate de baryum.

De façon plus précise, les constituants du mélange sont les suivants :

| | % en poids |
|---|---|
| Triol à base d'oxyde de propylène/oxyde d'éthylene | 32,07 |
| Polyester polyol (polybutylène glycol adipate) | 30 |
| Diéthylene glycol | 2,78 |
| Glycérine | 0,32 |
| Eau | 0,96 |
| Catalyseurs | 0,55 |
| Colorant | 0,38 |
| Trichlorofluorométhane | 4,18 |
| Stabilisant de cellules | 0,08 |
| Polyisocyanate (28 % NCO) | 28,68 |

La mise en forme est ici aussi effectuée par la technique RIM pour former une plaque ou feuille de plus forte épaisseur que celle mise en oeuvre dans l'Exemple 1, par exemple de l'ordre de 20 mm, pour l'obtention de produits d'insonorisation plus particulièrement destinés à équiper les planchers de véhicules automobiles.

La mousse de polyuréthanne souple de cette réalisation est dépourvue de "tack".

Les essais de gain effectués par la même méthode que celle indiquée ci-dessus pour l'Exemple 1 (SAE. J671) conduisent à des valeurs de 18 dB/s/kg/m² à 20°C, les variations des caractéristiques étant ici aussi peu importantes en fonction de la température.

### EXEMPLE 3

Une mousse de polyuréthanne souple selon l'invention peut non seulement être mise en oeuvre pour la fabrication de produits d'insonorisation à effet d'amortissement mais également pour la fabrication de produits d'insonorisation à effets d'isolation, notamment de systèmes à masse-ressort.

Pour une telle utilisation, l'invention prévoit de manufacturer le système masse-ressort en injectant ou projetant une mousse de polyuréthanne souple selon l'invention dans un moule préalablement garni d'un septum, par exemple en polyuréthanne chargé, en caoutchouc ou polymère thermoplastique, la mousse de polyuréthanne souple étant choisie pour sa faible densité .

L'utilisation de la mousse de polyuréthanne souple selon l'invention permet alors d'obtenir en ce qui concerne le gain d'isolement des résultats analogues ou meilleurs à ceux obtenus à l'aide de systèmes de masse-ressort usuels mais netttement plus lourds, par exemple ceux constitués d'un septum à base de bitume et un matériau ressort constitué par une mousse de feutre.

Bien que l'invention ait été décrite en référence à la mise en oeuvre des techniques de moulage par injection réaction (RIM) elle n'est pas limitée à ce type de techniques.

Bien au contraire, elle prévoit dans son cadre que les produits d'insonorisation à effet d'amortissement ou à effet d'isolation puissent être fabriqués par projection, ou par machine de mélange à basse pression.

Dans le premier cas, le produit d'insonorisation est avantageusement fabriqué par pistolétage dans un moule de forme appropriée alors que dans le second cas le produit est coulé dans un moule de forme.

Quel que soit le mode de mise en oeuvre, une réalisation particulièrement avantageuse de l'invention prévoit de réaliser le produit d'insonorisation sous forme d'un ensemble unitaire comprenant un système masse-ressort dans lequel la partie "ressort" est sous forme d'une mousse de polyuréthanne souple selon l'invention ou de type usuel, la surface libre de ladite mousse, -c'est-à-dire celle distante du septum-, étant en outre munie d'une couche de mousse de polyuréthanne souple à plus grande densité que celle formant la partie "ressort" par exemple d'une densité de 0,8 à 1,3 et qui agit par effet d'amortissement, ladite couche étant celle qui est alors disposée au contact de la tôle de tablier ou de plancher d'un véhicule sur la face de ladite tôle ou dudit plancher en regard de l'habitacle.

## Revendications

1. Mousse de polyuréthanne souple ayant une densité comprise entre 0,08 et 1,3 utilisable notamment pour la fabrication de produits d'insonorisation, en particulier de produits d'insonorisation de véhicules automobiles obtenue par réaction d'une composition constituée par (A) un diisocyanate ou des polyisocyanate(s) purs ou modifiés et (B) un mélange contenant un polyétherpolyol (b1) (teneur en OH de 25 à 56 mg KOH/g) et un polyester polyol (b2) (teneur en OH de 22 à 40 mg KOH/g), caractérisée en ce que le mélange représente au moins 75 % en poids de la composition (A) + (B) et contient :
(b1) 30 à 90 % en poids de polyétherpolyol ; et
(b2) 10 à 50 % en poids de polyester polyol.

2. Mousse de polyuréthanne selon la revendication 1, caractérisée en ce qu'elle est obtenue à partir des constituants suivants, en parties en poids :
| | |
|---|---|
| (b1) Triol à base d'oxyde de propylène/oxyde d'éthylène | 22,60 |
| (b2) Polyester polyol (polybutylèneglycol adipate) | 25 |
| Diéthylène glycol | 4,90 |
| Catalyseurs | 0,08 |
| Colorant | 1,96 |
| Trichlorofluorométhane | 2,94 |
| Chlorure de méthylène | 0,98 |
| Sulfate de baryum | 25 |
| (A) Polyisocyanate (28 % NCO) | 16,54 |

3. Mousse de polyuréthanne ayant une densité comprise entre 0,08 et 1,3, caractérisée en ce qu'elle est obtenue à partir des constituants suivants, en parties en poids :
| | |
|---|---|
| (b1) Triol à base d'oxyde de propylène/oxyde d'éthylène (teneur en OH de 25 à 56 mg KOH/g) | 32,07 |
| (b2) Polyester polyol (teneur en OH de 22 à 40 mg KOH/g) (polybutylèneglycol adipate) | 30 |
| Diéthylène glycol | 2,78 |
| Glycérine | 0,32 |
| Eau | 0,96 |
| Catalyseurs | 0,55 |
| Colorant | 0,38 |
| Trichlorofluorométhane | 4,18 |
| Stabilisant de cellules | 0,08 |
| Polyisocyanate (28 % NCO) | 28,68 |

4. Produit d'insonorisation, notamment pour habitacle de véhicule automobile, caractérisé en ce qu'il comprend une mousse de polyuréthanne souple selon l'une quelconque des revendications précédentes.

5. Produit d'insonorisation selon la revendication 4, caractérisé en ce que ladite mousse de polyuréthanne est sous forme d'une pièce moulée de faible épaisseur (2 à 4 mm) dans le cas d'une mousse de densité voisine de l'unité ou de plus forte épaisseur (de l'ordre de 20 mm) dans le cas d'une mousse de faible densité, de l'ordre de 0,08 à 0,11.

6. Produit d'insonorisation selon la revendication 4, caractérisé en ce que la mousse de polyuréthanne souple d'une densité de 0,08 à 0,11 forme la partie "ressort" d'un système masse-ressort.

7. Produit d'insonorisation selon la revendication 6, caractérisé en ce que le septum du système masse-ressort est, avantageusement en polyuréthanne chargé, caoutchouc ou polymère thermoplastique.

8. Produit d'insonorisation, notamment pour habitacle de véhicule automobile selon la revendication 4, caractérisé en ce qu'il comprend sous forme d'un ensemble unitaire un système masse-ressort dont la partie "ressort" est une mousse de polyuréthanne souple et une couche de polyuréthanne souple disposée sur la face libre de la partie "ressort" c'est-à-dire sur la face la plus distante du septum.

9. Produit d'insonorisation selon la revendication 8, caractérisé en ce que la mousse de polyuréthanne souple constitutive de la partie "ressort" est une mousse de faible densité et en ce que la couche à effet d'amortissement est une mousse de polyuréthanne souple selon l'une quelconque des revendications 1 à 3.

10. Procédé de fabrication d'un produit d'insonorisation selon l'une quelconque des revendications 4 à 9, caractérisé en ce que la mousse de polyuréthanne souple est façonnée par les techniques du moulage par injection réaction (RIM).

11. Procédé de fabrication d'un produit d'insonorisation selon l'une quelconque des revendications 4 à 9, caractérisé en ce que la mousse de polyuréthanne souple est mise en oeuvre par projection avantageusement par pistolétage.

12. Procédé de fabrication d'un produit d'insonorisation selon l'une quelconque des revendications 4 à 9, caractérisé en ce que la mousse de polyuréthanne souple est mise en forme à l'aide d'une machine de mélange basse pression.

## Claims

1. A flexible polyurethane foam having a density comprised between 0.05 and 1.3 and which can be used particularly for the manufacture of sound-proofing products, particularly sound-proofing products for motor vehicles and obtained by the reaction of a composition constituted by (A) a diisocyanate or polyisocyanate(s), pure or modified, and (B) a mixture containing a polyether polyol (B1) (OH content 25 to 56 mg KOH/g) and a polyester polyol (B2) (OH content 22 to 40 mg KOH/g), characterised in that the mixture represents at least 75% by weight of the composition (A) plus (B) and contains:
(b1) 30 to 90% by weight polyether polyol; and
(b2) 10 to 50% by weight polyester polyol.

2. A polyurethane foam according to Claim 1, characterised in that it is obtained from the following constituents, in parts by weight:
| | |
|---|---|
| (b1) Propylene oxide/ethylene oxide based triol | 22.6 |
| (b2) Polyester polyol (polybutyleneglycol adipate) | 25 |
| Diethylene glycol | 4.9 |
| Catalysts | 0.08 |
| Colouring agent | 1.96 |
| Trichlorofluoromethane | 2.94 |
| Methylene chloride | 0.98 |
| Barium sulphate | 25 |
| (A) Polyisocyanate (28% NCO) | 16.54 |

3. A polyurethane foam having a density comprised between 0.08 and 1.3, characterised in that it is obtained from the following constituents, in parts by weight:
| | |
|---|---|
| (b1) Propylene oxide/ethylene oxide based triol (OH content 25 to 56 mg KOH/g) | 32.07 |
| (b2) Polyester polyol (OH content 22 to 40 mg KOH/g) (polybutyleneglycol adipate) | 30 |
| Diethylene glycol | 2.78 |
| Glycerine | 0.32 |
| Water | 0.96 |
| Catalysts | 0.55 |
| Colouring agent | 0.38 |
| Trichlorofluoromethane | 4.18 |
| Cell stabiliser | 0.08 |
| Polyisocyanate (28% NCO) | 28.68 |

4. A sound-proofing product, particularly for the cabin of a motor vehicle, characterised in that it comprises a flexible polyurethane foam according to any one of the preceding Claims.

5. A sound-proofing product according to Claim 4, characterised in that the said polyurethane foam takes the form of a moulded piece of small thickness (2 to 4 mm) in the case of a foam of a density close to unity or of a greater thickness (of the order to 20 mm) in the case of a foam of low density, of around 0.08 to 0.11.

6. A sound-proofing product according to Claim 4, characterised in that the flexible polyurethane foam of a density of 0.08 to 0.11 forms the "spring" part of a mass-spring system.

7. A sound-proofing product according to Claim 6, characterised in that the septum of the mass-spring system is advantageously of filled polyurethane, rubber or thermoplastic polymer.

8. A sound-proofing product particularly for the cabin of a motor vehicle, according to Claim 4, characterised in that it comprises in the form of a unitary assembly a mass-spring system of which the "spring" part is a flexible polyurethane foam and a layer of flexible polyurethane disposed on the exposed surface of the "spring" part, that is to say on the surface which is farthest from the septum.

9. A sound-proofing product according to Claim 8, characterised in that the flexible polyurethane foam which constitutes the "spring" part is a low-density foam and in that the layer which has the damping effect is a flexible polyurethane foam according to any one of Claims 1 to 3.

10. A method of manufacturing a sound-proofing product according to any one of Claims 4 to 9, characterised in that the flexible polyurethane foam is shaped by reaction injection moulding techniques (RIM).

11. A method of manufacturing a sound-proofing product according to any one of Claims 4 to 9, characterised in that the flexible polyurethane foam is employed by a spraying process, advantageously by using a gun.

12. A method of manufacturing a sound-proofing product according to any one of Claims 4 to 9, characterised in that the flexible polyurethane foam is used with the assistance of a low-pressure mixing machine.

## Patentansprüche

1. Polyurethan-Weichschaum mit einer Dichte, die zwischen einschließlich 0.08 und 1.3 liegt, und der vor allem zur Herstellung von Produkten zur Schalldämmung, im Besonderen von Produkten zum Schallschutz von Automobilen verwendbar ist und der durch Reaktion eines Gemisches mit folgender Zusammensetzung erhalten wird: (A) ein Diisocyanat oder ein oder mehrere reine Polyisocyanate oder -cyanate oder ein oder mehrere reine oder modifizierte Polyisocyanate und (B) einer Mischung, die ein Polyetherpolyol (b1) (Gehalt an OH zwischen 25 bis 50 mg KOH/g) und ein Polyester-Polyol (b2) (Gehalt an OH zwischen 22 bis 40 mg KOH/g), dadurch gekennzeichnet, daß die Mischung zu mindestens 75 Gew.-% aus dem Gemisch (A) + (B) besteht und folgendes umfaßt:
(b1) 30 bis 90 Gew.-% an Polyether-Polyol;
und
(b2) 10 bis 50 Gew.-% an Polyester-Polyol.

2. Polyurethan-Weichschaum gemäß Anspruch 1, dadurch gekennzeichnet, daß er mit den folgenden Bestandteilen, bezogen auf Gewicht, erhalten wird:
| | |
|---|---|
| (b1) Triol auf der Grundlage von Propylenoxid /Ethylenoxid | 22.60 |
| (b2) Polyester-Polyol (Polybutylenglycoladipat) | 25 |
| Diethylenglycol | 4.90 |
| Katalysatoren | 0.08 |
| Farbstoff | 1.96 |
| Trichlorfluormethan | 2.94 |
| Methylenchlorid | 0.98 |
| Bariumsulfat | 25 |
| (A) Polyisocyanat (28 % NCO) | 16.54 |

3. Polyurethan-Weichschaum mit einer Dichte, die zwischen einschließlich 0.08 und 1.3 liegt, dadurch gekennzeichnet, daß er mit den folgenden Bestandteilen, bezogen auf Gewicht, erhalten wird:
| | |
|---|---|
| (b1) Triol auf der Grundlage von Propylenoxid /Ethylenoxid (Gehalt an OH zwischen 25 und 56 mg KOH/g) | 32.07 |
| (b2) Polyester-Polyol (Gehalt an OH zwischen 22 und 40 mg KOH/g) (Polybutylenglycoladipat) | 30 |
| Diethylenglycol | 2.78 |
| Glycerin | 0.32 |
| Wasser | 0.96 |
| Katalysatoren | 0.55 |
| Farbstoffe | 0.38 |
| Trichlorfluormethan | 4.18 |
| Zellenstabilisator | 0.08 |
| (A) Polyisocyanat (28 % NCO) | 28.68 |

4. Produkt zur Schalldämmung, besonders für die Fahrgastzelle von Kraftfahrzeugen, dadurch gekennzeichnet, daß es einen Polyurethan-Weichschaum gemäß einem der vorhergehenden Ansprüche umfaßt.

5. Produkt zur Schalldämmung gemäß Anspruch 4, dadurch gekennzeichnet, daß der besagte Polyurethanschaum in Form eines Formteiles mit geringer Stärke (2 bis 4 mm) vorliegt, und zwar im Falle eines Schaumes mit einer Dichte, die im Bereich von 1 liegt, oder mit größerer Stärke (in der Größenordnung von 20 mm) im Falle eines Schaumes mit geringer Dichte, in der Größenordnung von 0.08 bis 0.11.

6. Produkt zur Schalldämmung gemäß Anspruch 4, dadurch gekennzeichnet, daß der Polyurethan-Weichschaum mit einer Dichte von 0.08 bis 0.11 den Teil "Feder" eines Massen-Feder-Systemes bildet.

7. Produkt zur Schalldämmung gemäß Anspruch 6, dadurch gekennzeichnet, daß das Septum des Massen-Feder-Systemes vorteilhafterweise aus geladenem Polyurethan, Kautschuk oder thermoplastischem Polymer besteht.

8. Produkt zur Schalldämmung, besonders für die Fahrgastzelle von Kraftfahrzeugen, gemäß Anspruch 4, dadurch gekennzeichnet, daß es in Form einer einzigen Baueinheit ein Massen-Feder-System umfaßt, dessen "Feder"-Teil ein Polyurethan-Weichschaum und eine Schicht aus Polyurethan-Weichschaum ist die über der freien Seite des "Feder"-Teiles angebracht ist, d.h. auf der Seite, die vom Septum am wertesten entfernt ist.

9. Produkt zur Schalldämmung gemäß Anspruch 8, dadurch gekennzeichnet, daß der Polyurethan-Weichschaum, der wesentlich für den "Feder"-Teil ist, ein Schaum mit geringer Dichte ist und dadurch, daß die Schicht, die den Dämpfungseffekt bewirkt, aus einem Polyurethan-Weichschaum gemäß einem der Ansprüche 1 bis 3 besteht.

10. Verfahren zur Herstellung eines Produktes zur Schalldämmung gemäß einem der Ansprüche 4 bis 9, dadurch gekennzeichnet, daß der Polyurethan-Weichschaum mittels reaction injection moulding-Technik (RIM, Reaktionsspritzguß) geformt wird.

11. Verfahren zur Herstellung eines Produktes zur Schalldämmung gemäß einem der Ansprüche 4 bis 9, dadurch gekennzeichnet, daß der Polyurethan-Weichschaum durch Spritzen, vorteilhafterweise durch Spritzguß benutzt wird.

12. Verfahren zur Herstellung eines Produktes zur Schalldämmung gemäß einem der Ansprüche 4 bis 9, dadurch gekennzeichnet, daß der Polyurethan-Weichschaum mit Hilfe einer Niederdruckmischmaschine geformt wird.
